(19) Europäisches Patentamt
European Patent Office
Office européen des brevets

(11) **EP 1 219 919 B1**

(12) **EUROPÄISCHE PATENTSCHRIFT**

(45) Veröffentlichungstag und Bekanntmachung des Hinweises auf die Patenterteilung:
**27.05.2015   Patentblatt 2015/22**

(51) Int Cl.:
*G01B 9/04* *(2006.01)*      *G02B 21/00* *(2006.01)*
*G01N 21/31* *(2006.01)*

(21) Anmeldenummer: **01128293.6**

(22) Anmeldetag: **29.11.2001**

(54) **Verfahren, Anordnung und System zur Ermittlung von Prozessgrössen**

Method, arrangement and system for the determination of process magnitudes

Procédé, dispositif et système pour la détermination des grandeurs d' un processus

(84) Benannte Vertragsstaaten:
**DE FR GB**

(30) Priorität: **30.12.2000   DE 10065783**

(43) Veröffentlichungstag der Anmeldung:
**03.07.2002   Patentblatt 2002/27**

(73) Patentinhaber: **Leica Microsystems CMS GmbH**
**35578 Wetzlar (DE)**

(72) Erfinder: **Olschewski, Frank**
**69118 Heidelberg (DE)**

(74) Vertreter: **Schaumburg & Partner Patentanwälte (GbR)**
**Patentanwälte**
**Postfach 86 07 48**
**81634 München (DE)**

(56) Entgegenhaltungen:
**DE-A- 19 829 944      US-A- 5 798 262**

EP 1 219 919 B1

**Beschreibung**

Die Erfindung betrifft ein Verfahren zur Ermittlung von Prozessgrößen für ein Mikroskopsystem. Im besonderen handelt es sich hierbei um nicht direkt messbare Prozessgrößen auf der Basis lokaler Korrelationen, die bei der Auswertung und Darstellung der in der Fluoreszenzmikroskopie ermittelten Daten auftreten.

Zusätzlich betrifft die Erfindung eine Anordnung zur Ermittlung dieser Prozessgrößen in einem Mikroskopsystem.

Desweiteren betrifft die Erfindung ein System zur Ermittlung von Prozessgrößen in einem Mikroskopsystem. Im besonderen betrifft das System ein abtastendes Mikroskop, das Licht parallel oder sequentiell über ein Objekt führt, mehrere Detektoren, die aus dem vom Objekt ausgehenden Licht Intensitäten aus unterschiedlichen Spektralbereichen ermitteln, eine Verarbeitungseinheit, einen Rechner, eine Eingabeeinheit und ein Display, die in geeigneter Weise zusammenwirken.

Im folgenden wird diese Anordnung - ohne Beschränkung der Allgemeinheit - anhand eines konfokalen abtastenden Mikroskops näher beschrieben, wobei dem Fachmann hinreichend klar ist, dass auch andere Formen abtastender Mikroskope (z.B. CCD basiert), Spektroskope oder verwandter Messgeräte verwendet werden können.

Interne durch Korrelation zu kennzeichnende Prozessparameter treten in der Fluoreszenzmikroskopie häufig auf. Die Bildentstehung bei Immunofluoreszent gefärbten Strukturen in einem Objekt hat das Ziel, dass Farbstoffe eindeutig innerhalb des durch das Objekt definierten Volumens zu identifizieren sind. Der Zustand innerhalb eines hinreichend kleinen Probenvolumens, kann mathematisch als Vektor von Konzentrationen $\overline{\rho} = (\rho_1 \ldots \rho_n)$ beschrieben werden. Physikalisch wird durch eine geeignete Anregung in der Probe der Vektor von Konzentrationen $\overline{\rho} = (\rho_1 \ldots \rho_n)$ in ein Lichtsignal mit kontinuierlichem Spektrum überführt, optisch in unterschiedliche Bänder zerlegt, spektral gewichtet (z.B. durch optische Filtersysteme) und sequentiell nacheinander oder parallel auf einen Detektor oder mehrere Detektoren gelenkt. Der Detektor kann ein Photosensor oder ein Array mit mehreren Photosensoren sein (CCD Chips finden dann Anwendung, wenn eine hohe Dynamik nicht unbedingt erforderlich ist). Auf diese Art werden mehrere Intensitäten $I_i$ aus dem zugehörigen Probenvolumen detektiert, die sich bei gleichzeitiger Aufzeichnung von Ortskoordinaten zur Bildgebung verwenden lassen. Die einzelnen Intensitäten $I_i$ eines Probenvolumens lassen sich als Vektor $\overline{I} = (I_1 \ldots I_q)$ zusammenfassen, welche im folgenden, ohne Beschränkung der Allgemeinheit, nach aufsteigender Wellenlänge (absteigender Energie) innerhalb des Vektors sortiert sind, und die Gesamtheit der an einem Ort erfassten Information darstellt.

Die Eigenschaften der Bildentstehung bei Immunofluoreszent gefärbten Strukturen stellen sich nach dem Stand der Technik wie folgt dar:

Die an der Informationskette beteiligten Elemente sind im wesentlichen linear, so dass man die gesamte Informationskette mit guter Näherung als lineares Mischproblem mit $\overline{\rho} = \mathbf{M}\overline{\rho} + \overline{n}$ beschreiben kann, wobei das Rauschen beschreibt und die Mischungsmatrix $\mathbf{M}$ eine $q \times n$ -Matrix ist. Dabei werden Mischprozesse zwischen Objektvolumen durch die Tiefpass-Charakteristik der Optik in dieser Näherung vernachlässigt. Die den Anwender interessierende Größe ist $\overline{\rho}$, die messbare Größe ist $\overline{I}$. Das Rauschen trennt sich in die Anteile: Autofluoreszenz, lichtinduziertes Rauschen und elektronisches Rauschen auf.

Die Mischungsmatrix $\mathbf{M}$ ist a priori nicht bekannt, da viele Teile der beschriebenen Informationskette (z.B. exakter Verlauf von Spektren bei chemischen Umgebungsparametern, Toleranzen von Bauteilen) zum Zeitpunkt der Messung nur unzureichend bekannt sind. In der Mikroskopie gilt aufgrund der begrenzten Detektorzahl in der Regel $q < n$. Aus diesem Grund führt $\mathbf{M}$ in der Regel eine irreversible Informationsreduktion durch. In der Spektroskopie bleibt mehr Information erhalten da die Dimension des erfassten Vektors größer ist.

Bei der häufig genutzten immunologischen Färbung werden die beobachteten Strukturen mit unterschiedlichen Farbstoffen versehen. An jeder Struktur selber kann nur eine begrenzte, diskrete Menge von Antikörpern beteiligt sein. Aus diesem Grund bilden derartige Strukturen zwischen den Komponenten des Vektors $\overline{\rho}$ feste Verhältnisse aus. Alle Strukturen mit gleichen Farbstoffbindungen liegen aus diesem Grund auf einer Gerade durch den Ursprung im Konzentrationsraum und werden durch die optische Abbildung (die Mischungsmatrix $\mathbf{M}$) auf Geraden durch den Ursprung im Intensitätsraum abgebildet. In der Regel bleibt die Gerade erhalten, bei $q < n$ liefert die Projektion ($\mathbf{M} \overline{\rho}_1$) jedoch mitunter sehr kleine Steigungen (numerisch schlecht definiert) oder wirklich den Nullvektor als Ergebnis (totaler Informationsverlust).

Aus diesem Grund zerfallen Datensätze der Mikroskopie in mehrere Teilmengen, die sich durch lokale Korrelation (Steigungen der Geraden im Intensitätsraum) unterscheiden. Die Lokalisation der Geraden im Intensitätsraum gibt Aufschluss über das Material im Probenvolumen, die Position des Messwertes auf der Geraden gibt Aufschluss über die Menge.

Dieses Modell der Bildentstehung ist akzeptierter und gängiger Stand der Technik und zeigt mehrere Ausprägungen mit praktischen Anwendungen.

In der von Demandolx und Davoust beschriebenen Mehrfarbanalyse werden biologische Strukturen durch das Einbringen einzelner Farbstoffe lokalisiert (siehe Demandolx, Davoust: Multicolour Analysis and local Image Correlation in Confocal Microscopy; Journal of Microscopy, Vol. 185, Pt. 1, January 1997, pp. 21-36). Reagiert eine Struktur auf einen Farbstoff, so spricht man von Lokalisation. Reagiert eine Struktur auf mehr als einen Farbstoff gleichzeitig spricht man von Ko-Lokalisation und die Anzahl der im Intensitätsvektorraum zu beobachtenden Geraden ist größer als die Anzahl der Farbstoffe. Dieser Sachverhalt wird durch eine geschickte Visualisierung bei der Analyse sichtbar gemacht. Die von Demandolx und Davoust eingeführten Techniken des Zytofluorogramms, visualisiert ein Ensemble zweidimensionaler Intensitäten $\{\overline{I}_i\}$ (in der Mikroskopie die Pixel eines Bildes, Voxel eines Volumens oder einer zeitlich aufeinanderfolgenden Serie dergleichen, in der Zytofluorometrie die Messungen mehrerer Proben) als zweidimensionalen Scatter-Plot, welches im wesentlichen eine zweidimensionales Häufigkeitsverteilung darstellt. Auf dieser Basis erhält man eine Schätzung der Verbundwahrscheinlichkeitsfunktion der Intensitäten $\overline{I}$, ein Verfahren das in der mathematischen Datenanalyse Stand der Technik ist und dessen Güte nur von der Größe des Ensembles abhängt. Durch eine geeignete Farbcodierung und grafischer Darstellung erhält man ein Bild der Intensitätsverteilung, in dem die Geraden als verbreiterte Spuren durch das Auge des Benutzers zu lokalisieren ist. Die Verbreiterung existiert aufgrund aller Formen des Rauschens und evtl. im Hintergrund wirkender chemischer Einflüsse.

Diese Technik hat in der Mikroskopie weite Anwendung gefunden und gilt auch für diese Erfindung. Durch Ermittlung der Geraden mit der stärksten Ausprägung (Häufigkeit) erhält man beispielsweise die Information, die der Benutzer eigentlich messen wollte und die den vorgenommenen Färbungen entsprechen. Jede Form von Schräglage stellt eine Informationsverfälschung dar, die durch parasitäre spektrale Übersprechphänomene verursacht werden, die sich im Design optischer Elemente und fluoreszenter Proben nicht ganz vermeiden lassen. Kennt man die Lage, kann man die in den Intensitäten vorhandene Information durch einfache arithmetische Operationen wieder Trennen. Der ganze Vorgang wird häufig durch ein grafisches User Interface auf dem Computerbildschirm realisiert, in dem der Zytofluorogrammdarstellung Linien überlagert werden, die vom Benutzer an die gefundenen Spuren der Geraden angepasst werden. Die Korrektur der Messdaten kann dann durch eine einfache Software erfolgen, die aus der Lage der Geraden die Korrekturoperation ableitet. Überlagert man dem Zytofluorogramm hingegen geschlossener graphischer Modelle (Regions Of Interest), lässt sich eine binäre Segmentierung ko-lokalisierter Bereiche erreichen. Eine Erweiterung des Zytofluorogramm Konzepts auf drei Kanäle ist auch möglich und seit längerem in der eigenen Leica Produkt-Software für konfokale und Multiphotonensysteme (LCS = Leica Confocal Software) implementiert.

Das bestehende Verfahren hat Nachteile, die mit dieser Erfindung kompensiert werden. Die Verfahren sind zwar anschaulich, aber sehr stark von den visuellen Fähigkeiten des Benutzers abhängig. Aus diesem Grund ergibt sich eine subjektive Verfälschung sämtlicher ermittelten Messungen, die einzig und allein von den Fähigkeiten des Benutzers abhängen mit dem System umzugehen und somit bezüglich Reproduzierbarkeit schlecht abschneiden. Die Auswertung von Mehrkanalbildern führt zu weiteren Problemen, da die Visualisierung höherdimensionaler Intensitätsverteilung (Zytofluorogramme, Scatter Plots) nicht direkt durchführbar ist. Hier muss auf Projektionen und ähnliche Kunstgriffe ausgewichen werden, die in der Praxis nur schwer zu interpretieren sind. Bereits eine Durchführung mit drei Kanälen ist für einige Benutzer in der Praxis schwer durchführbar, da ein dreidimensionales Vorstellungsvermögen zur Interpretation der Messdaten vorhanden sein muss. Auch hier realisiert die Erfindung eine Verbesserung. Des weiteren manipulieren die Zytofluorogramm basierten Methoden große Datenmengen im Block, was sie von einer Nutzung während der Messvorgänge ausschließt. Es handelt sich nicht um On-Line Algorithmen, da zu viele Berechnungen/Datenmanipulationen vorliegen, kann man nicht auf einem rentablen Computermodell oder in Elektronik diese Aufgaben im Flug ausführen. Aus diesem Grund sind auch auf diesen Verfahren basierende Einstellalgorithmen, die wie unten aufgezeigt wird möglich und nötig sind, nicht rentabel realisierbar.

Das oben beschriebene Mess-Modell wird auch benötigt, um aktiv Systemeinstellungen des Mikroskopsystems durchzuführen. Die Konfiguration und das Design von Fluoreszenzmikroskopen, komplexeren Mikroskopiesystemen und Spektroskopiesystemen kann über obiges Modell veranschaulicht werden. Ein gutes Mikroskopdesign zielt auf eine Mischungsmatrix **M** mit der Form einer Diagonalmatrix. Dies entspricht einer 1-1 Beziehung zwischen den zu detektierenden Farbstoffen und den Detektoren. Während der Messung sollten dann die gemessenen Kanäle weitestgehend unabhängig sein. Anschaulich bedeutet dies, dass die Bilder der Geraden weitestgehend senkrecht stehen sollen.

Designkriterien zum Erreichen dieses Ziels sind z.B. die Auswahl von Lasern, optischer Filter, Detektoren oder, im Falle des von Leica entwickelten SP2-Moduls, vordefinierte Filtermakros zur spektralen Separation mit deren Hilfe eine derartige Diagonalisierung erreicht werden soll. Durch eine geeignete Konfiguration derartiger Elemente kommt man diesem Ziel näher.

Die deutsche Patentanmeldung DE-A-198 29 944 offenbart hierzu eine Möglichkeit auf der Basis einer Datenbank mittels Inferenz (logische Schlussfolgerungen) eine mögliche Gerätekonfiguration zu finden. Aufgrund der Tatsache, dass alle diese Verfahren nur mit beschränktem Vorwissen arbeiten können, kann dieses Ziel aber nur teilweise erreicht werden. Mehrfachanregungen, spektrales Übersprechen, Toleranzen und Alterung von genutzten Baugruppen, die begrenzte Flankensteilheit optischer Filter und die physikalisch-chemischen Umgebungsparameter ( pH-Wert, Temperatur, Alter und Responsefähigkeit biologischer Objekte) üben einen weiteren Einfluss aus, der per se von derartigen Konfigurationsverfahren aufgrund fehlenden a priori Wissens vernachlässigt werden muss. Allein das spektrale Übersprechen führt zu einer Entartung von **M** zur Dreiecksmatrix. Weitere Fehlerbetrachtungen führen schnell zu einer voll besetzten Matrix **M**, in der die obere Dreiecksmatrix allerdings sehr viel kleinere Werte als die untere Dreiecksmatrix haben sollte. Daraus resultiert, dass die Bilder der Geraden nicht senkrecht stehen, sondern schief. Aus diesem Grund bleiben alle nur auf Inferenz basierten Verfahren unvollständig. Um die Konfiguration ausgehend von einer derartigen suboptimalen Einstellung verbessern zu können, muss die Lage der Geraden als Prozessparameter gemessen werden. Für diese Prozessparameter bzw. Kombinationen/Paare von Prozessparametern können die Zielzustände angegeben werden (Orthogonalität), für welche die Mikroskopeinstellungen optimal sind und somit auch optimale Daten bzw. Bildinformation des zu untersuchenden Objekts liefert. Dies ist eine relativ einfache Aufgabe, da derartige Optimierungsaufgaben nach dem Stand der Technik durch eine Vielzahl unterschiedlicher Verfahren gut gelöst werden, wenn man weiß was man will und wo man ist (siehe z.B. Michaelewicz, Fogel: How to Solve It: Modern Heuristic. Berlin: Springer, 2000). Diese Erfindung löst für diese Zwecke unter anderem die Aufgabe die internen Prozesse in Echtzeit hinreichend zu quantifizieren, Ist- und Soll-Zustand ermittelbar zu machen und diesen Optimierungsverfahren zugänglich zu machen. Des weiteren haben die in dem Verfahren beschriebenen Mechanismen die notwendigen Eigenschaften (z.B. Monotonie der Fehlerfunktionen), um diese optimal in Optimierungsaufgaben einzusetzen.

Der gegenwärtigen Erfindung liegt die Aufgabe zugrunde ein Verfahren zur Ermittlung lokaler Korrelation zu schaffen, das es erlaubt große Datenmengen in Echtzeit zu verarbeiten. Hinzu kommt, dass alle aufgenommenen Daten zur Auswertung herangezogen werden, und dass dem Benutzer eine effiziente und bequeme Untersuchung der Proben bezüglich dieser Korrelationsmaße ermöglicht ist. Diese Aufgabe wird gelöst durch ein Verfahren gemäß den, kennzeichnenden Merkmalen des Anspruchs 1.

Eine weitere Aufgabe der Erfindung ist es eine Anordnung zur Ermittlung lokaler Korrelation zu schaffen, die es erlaubt große Datenmengen in Echtzeit zu verarbeiten, die alle aufgenommenen Daten zur Auswertung heranzieht und dass sie dem Benutzer eine effiziente Untersuchung der Proben ermöglicht. Hinzu kommt, dass mit der Anordnung die Einstellung ermittelt wird, wobei die Mikroskopkonfiguration auf der Basis von Repräsentationen von Spuren lokalen Korrelationen und deren Abweichung vom Ideal Einstellschritte abgeleitet werden.

Obige Aufgabe wird gelöst durch eine Anordnung mit den Merkmalen des kennzeichnenden Teils des Anspruchs 10.

Eine zusätzliche Aufgabe der Erfindung ist es ein Mikroskopsystem zur Ermittlung lokaler Korrelation zu schaffen, das es erlaubt große Datenmengen in Echtzeit zu verarbeiten, das alle aufgenommenen Daten zur Auswertung heranzieht und das dem Benutzer eine effiziente Untersuchung der Proben ermöglicht.

Diese Aufgabe wird gelöst durch ein Mikroskopsystem mit den Merkmalen des Anspruchs 20.

Ein Vorteil dieser Erfindung ist es, dass durch das Mikroskopsystem ein Systemdesign aufgezeigt wird, indem durch eine geeignete Verarbeitungseinheit die Ermittlung von Repräsentationen der Spuren von Korrelationen im Intensitätsraum während des normalen Betriebs ermittelt und dem Benutzer zur Verfügung gestellt werden. Dies geschieht dadurch, dass den Benutzer die ermittelten Daten in graphischer Form auf einem Display dargestellt werden. An Hand der Darstellung kann der Benutzer dann die Veränderungen an der Einstellung des Mikroskopsystems vornehmen, um eine bessere Auswertung der Messdaten zu erhalten.

Als besonders vorteilhaft erweist sich, dass durch die Messvorschrift eine minimale Verrechnung der aufgenommenen Messdaten eine Menge von Repräsentationen korrelationsbasierter Spuren innerhalb der Messdaten aufzeigt wird. Diese Daten werden im folgenden als Code-Book-Vektoren bezeichnet. Durch das erfindungsgemäße Verfahren macht die Korrektur erfasster Messdaten in Echtzeit bezüglich zu erwartender parasitärer Messfehler möglich. Hierzu wird auf der Basis von Repräsentationen von Spuren der lokalen Korrelationen eine reproduzierbare Korrektur durchgeführt.

Ein weiterer Vorteil dieser Erfindung ist unter anderem die Schaffung von Reproduzierbarkeit.

Das erfindungsgemäße Mikroskopsystem mit adaptiver Korrektur reduziert das spektrale Übersprechen zwischen den einzelnen Detektionskanälen und erlaubt es große Datenmengen in Echtzeit zu verarbeiten. Eine geeignete Verarbeitungseinheit ermittelt Repräsentationen der Spuren von Korrelationen im Intensitätsraum während des normalen Betriebs. Die bestimmte Korrekturvorschrift ermöglicht es, die Messdaten korrigiert und dem Benutzer zur Verfügung gestellt werden.

Ferner besitzt das Mikroskopsystem die Eigenschaft der materialspezifischen Bildgebung, wodurch es möglich ist, große Datenmengen in Echtzeit zu verarbeiten. Dieses Mikroskopsystem, besitzt eine geeignete Verarbeitungseinheit, die die Ermittlung von Repräsentationen der Spuren von Korrelationen im Intensitätsraum während des normalen Betriebs ermittelt. Ferner wird eine Rückklassifikation der Messdaten auf die Korrelationsrepräsentationen durchführt und dem Benutzer als Bild zur Verfügung gestellt.

Ein weiterer Vorteil der Erfindung ist die Tatsache, dass die beschriebenen Lösungen durch die Nutzung einer geeigneten Software auf weitere Messmethoden für Parameter, die sich nicht direkt messen lassen aber auf Spuren von Korrelationen im Intensitätsraum, bei geeigneter Bildung eines Intensitätsraums, zurückführen lassen.

Hinzu kommt, dass die Quantifizierung photodestruktiver Effekte ebenfalls möglich ist. Es werden zeitversetzte Intensitäten desselben Ortes auf Repräsentationen lokaler Spuren von Korrelationen untersucht und zur Ermittlung der Bleichrate herangezogen. Ferner kann das Mikroskopssystem mit integrierter Quantifizierung die photodestruktiven Effekte darstellen. Dies wird durch eine zeitverzögerte Zuleitung von Intensitätsvektoren in eine echtzeitfähige Verarbeitungseinheit zur Ermittlung lokaler Korrelationen mit anschließender Quantifizierung der Bleichrate und der Darstellung auf einem Display ermöglicht.

In der Zeichnung ist der Erfindungsgegenstand schematisch dargestellt und wird anhand der Figuren nachfolgend beschrieben. Dabei zeigen:

Fig. 1      eine schematische Darstellung eines Systems mit einem Konfokalmikroskop;

Fig. 2      eine schematische Darstellung zur Realisierung eines Verfahrens zur Bewertung und Einstellung von Prozessgrößen;

Fig. 3      eine schematische Darstellung einer Realisierung des Prozesses zur Messung der spektralen Trenngüte; und

Fig. 4      eine schematische Darstellung einer Realisierung des Prozesses zur Messung der Bleichrate.

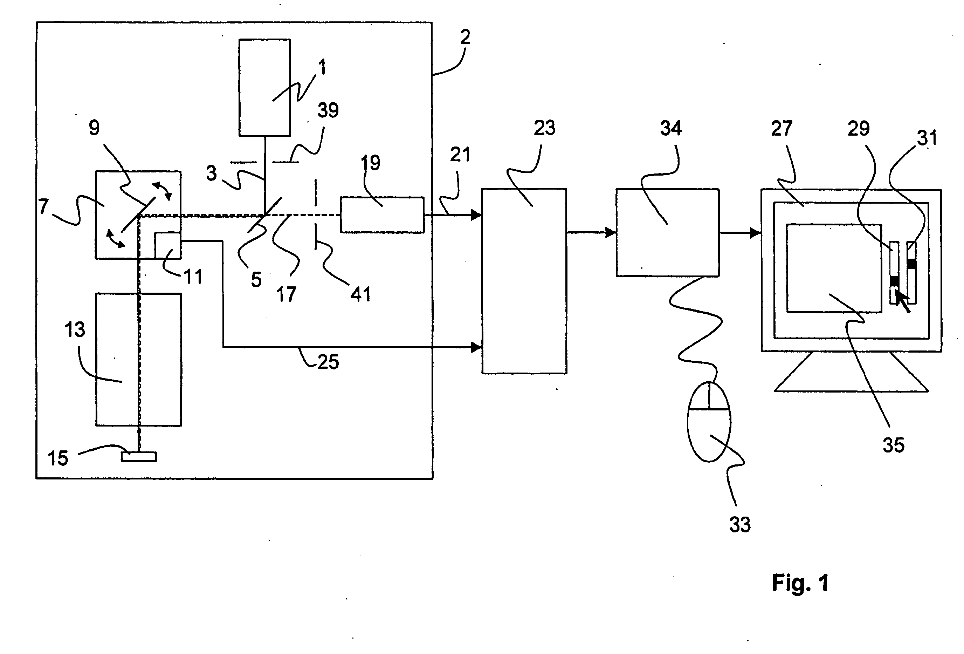

Fig. 1 zeigt schematisch ein System mit einem konfokalen Scanmikroskop 2. Die Beschreibung beschränkt sich auf ein konfokales Scanmikroskop 2, es ist aber jeden Fachmann klar, dass das erfindungsgemäße Verfahren auch bei anderen, von Mikroskopen aufgenommenen Bildinformationen, Anwendung findet. Der von einem Beleuchtungssystem 1 kommende Lichtstrahl 3 wird von einem Strahlteiler 5 zum Scanmodul 7 reflektiert, das einen kardanisch aufgehängten Scanspiegel 9 beinhaltet, der den Lichtstrahl 3 durch die Mikroskopoptik 13 hindurch über bzw. durch das Objekt 15 führt. Der Lichtstrahl 3 wird bei nicht transparenten Objekten 15 über die Objektoberfläche geführt. Bei biologischen Objekten 15 (Präparaten) oder transparenten Objekten kann der Lichtstrahl 3 auch durch das Objekt 15 geführt werden. Dies bedeutet, dass verschiedene Fokusebenen des Objekts 15 nacheinander durch den Lichtstrahl 3 abgetastet werden. Die nachträgliche Zusammensetzung ergibt dann ein dreidimensionales Bild des Objekts 15. Der vom Beleuchtungssystem 1 kommende Lichtstrahl 3 ist als durchgezogene Linie dargestellt. Das vom Objekt 15 ausgehende Licht 17 gelangt durch die Mikroskopoptik 13 und über das Scanmodul 7 zum Strahlteiler 5, passiert diesen und trifft auf mindestens einen Detektor 19, der als Photomultiplier ausgeführt ist. Wenn bei bestimmten Anwendungen auf die hohe Dynamik der Photomultiplier verzichtet werden kann, finden auch CCD-Sensoren als Detektoren Einsatz. Das vom Objekt 15 ausgehende Licht 17 ist als gestrichelte Linie dargestellt. Im Detektor 19 werden elektrische, zur Leistung des vom Objekt ausgehenden Lichtes 17 proportionale Detektionssignale 21 erzeugt und an die Verarbeitungseinheit 23 weitergegeben. Obwohl in Fig. 1 nur ein Detektor dargestellt ist, ist es jedem Fachmann klar, dass der Detektor 19 aus mehreren Detektoren bestehen kann, die jeweils einzelne Spektralbereiche des vom Objekt 15 ausgehenden Lichts detektieren.

Die im Scanmodul 7 mit Hilfe eines induktiv oder kapazitiv arbeitenden Positionssensors 11 erfassten Positionssignale 25 werden ebenfalls an die Verarbeitungseinheit 23 übergeben. Es ist für einen Fachmann selbstverständlich, dass die Position des Scanspiegels 9 auch über die Verstellsignale ermittelt werden kann. Die eingehenden, Analogsignale werden in der Verarbeitungseinheit 23 zunächst digitalisiert. Die Signale werden an einen Rechner 34 übergeben, an dem eine Eingabeeinheit 33 angeschlossen ist. Der Benutzer kann bezüglich der Verarbeitung bzw. Darstellung der Daten mittels der Eingabeeinheit 33 entsprechende Selektionen treffen. In Fig. 1 ist als eine Eingabeeinheit 33 eine Maus dargestellt. Es ist jedoch für jeden Fachmann selbstverständlich, dass auch Tastatur und ähnliches als Eingabeeinheit 33 verwendet werden kann. Auf einem Display 27 wird z.B. ein Abbild 35 des Objekts 15, eine Repräsentation der ermittelten Code-Book-Vektoren in einem Koordinatensystem zur Visualisierungen von Korrelationsspuren und ähnliches dargestellt. Hinzu kommt, dass zusätzlich auf dem Display 27 auch Einstellelemente 29, 31 für die Bildaufnahme dargestellt werden. In der hier gezeigten Ausführungsform sind die Einstellelemente 29, 31 als Schieber dargestellt. Jede andere Ausgestaltung liegt im handwerklichen Können eines Fachmanns. Die Positions- und Detektionssignale werden in der Verarbeitungseinheit 23 in Abhängigkeit von den jeweils gewählten Einstellungen zusammengesetzt und auf dem Display 27 angezeigt. Das bei einem konfokalen Scanmikroskop üblicherweise vorgesehene Beleuchtungspinhole 39 und das Detektionspinhole 41 sind der Vollständigkeit halber schematisch eingezeichnet. Weggelassen sind wegen der besseren Anschaulichkeit hingegen einige optische Elemente zur Führung und Formung der Lichtstrahlen. Diese sind einem auf diesem Gebiet tätigen Fachmann hinlänglich bekannt.

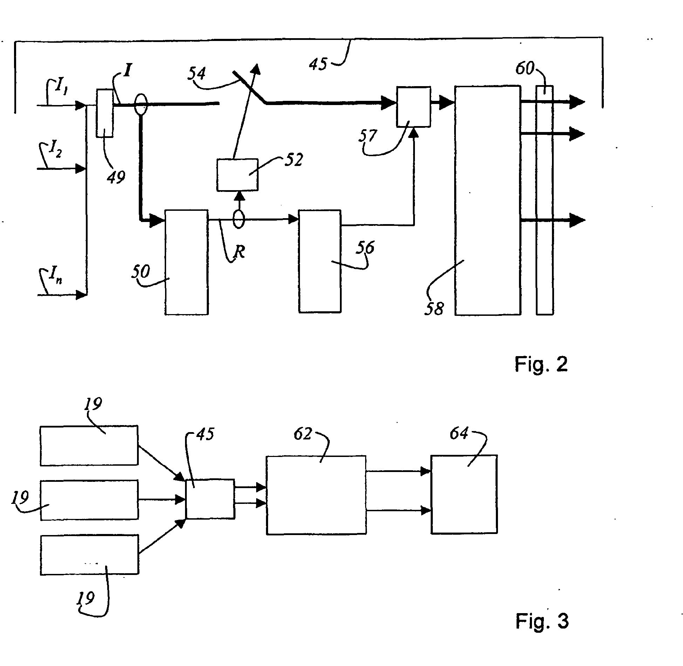

In Fig. 2 ist eine schematische Darstellung zur Realisierung eines Verfahrens zur Bewertung und Einstellung von Prozessgrößen. Wie bereits oben erwähnt, werden die Daten hinsichtlich der Fluoreszenzeigenschaften des zu untersuchenden Objekts 15 mit entsprechenden Detektoren 19 aufgenommen und verschiedenen Berechnungsverfahren zugeleitet. Zuerst werden die von einer Vielzahl von Detektoren 19 ermittelten Intensitäten einem Mittel 49 zugeleitet, das hieraus einen Intensitätsvektor bildet. Der Intensitätsvektor $\bar{I}$ ist aus den Komponenten $I_1$, $I_2$, ... , $I_n$ gebildet, die aus den unterschiedlichen Spektralbereichen eines Messvorgangs kommen. Auf der Basis einer Metrik wird mit einem Mittel 50 die Vektornorm berechnet und anhand des Wertes entschieden, ob es sich um Autofluoreszenzrauschen und Hintergrund oder um ein Nutzsignal handelt (Schwellwertprüfung). Hierzu findet ein Mittel 50 zum Berechnen der Norm des Intensitätsvektors Anwendung. Der Test entscheidet, ob der Datenvektor als Nutzsignal einer weiteren Verarbeitung unterliegt oder nicht. Hier bietet sich die euklidische Norm an, da dies physikalisch mit Energien vergleichbar ist. Eine Verallgemeinerung auf andere Metriken der Linearen Algebra ist jedoch möglich. Das Nutzsignal von den Detektoren 19 wird normiert und in seiner Dimensionalität reduziert. Das extrahierte Nutzsignal wird an einen Vektorquantisierer 58 weitergeleitet, der intern einen Satz von Intensitätsvektoren beinhaltet, welche die Repräsentationen der Spuren lokaler Korrelation darstellen und als Ergebnis des Verfahrens zur Verfügung stehen. Die Menge der im Vektorquantisierer 58 vorhandenen Vektoren spiegelt die Erwartungshaltung des Systementwicklers wieder, bzw. sind aus dem a priori Wissen des Benutzers oder durch eine geeignete Software im Rechner 34 ermittelbar und veränderlich. Diese Vektoren werden im folgenden als Code-Book-Vektoren bezeichnet. Der Abgleich von Messwerten und Repräsentationen wird durch den Vektorquantisierer 58 durchgeführt, dessen mögliche Funktionsweisen nachstehend ausführlich beschrieben sind. Aus dem Vektorquantisierer 58 werden die Code-Book-Vektoren als Repräsentationen von Spuren lokaler Korrelation mit einem entsprechenden Mittel 60 ausgelesen.

Das oben beschriebene Verfahren ist in einer Einrichtung 45 realisiert. Die Einrichtung 45 vergleicht einlaufende Vektoren (Intensitätsvektor $\bar{I}$) mit Code-Book-Vektoren, um die einlaufenden Vektoren den Code-Book-Vektoren immer etwas ähnlicher zu machen und die Repräsentationen an die Eingangsverteilung anzupassen. In der bevorzugten Ausführungsform, wie in Fig. 2 dargestellt, werden die gemessenen Intensitäten $I_1$, $I_2$, ... ,$I_n$ zu einem Intensitätsvektor $\bar{I}$ zusammengefasst. Gemessen werden die Intensitäten $I_1$, $I_2$, ... ,$I_n$ mit dem mindestens einen Detektor 19, der in dem Mikroskopsystem vorgesehen ist. Der $\bar{I}$ wird einem Mittel 50 zum Bilden des Betrages bzw. zum Berechnen einer Norm zugeführt. Der Betrag (euklidische Länge) R des Vektors wird berechnet, der wie oben erwähnt mit der Energie vergleichbar ist. Die Intensitätsvektoren $\bar{I}$ werden einem Mittel 52 zum Aussondern zugeführt. Es werden nur Intensitätsvektoren $\bar{I}$ betrachtet, deren Betrag größer als ein vorgegebener Schwellwert *SW* ist, um Bildhintergrund, Rauschen, schlecht ausgeprägte Ko-Lokalisationen auszuschließen und nicht der nachfolgenden Berechnung zuzuführen. Ist der Betrag zu klein, werden diejenigen Intensitätsvektoren $\bar{I}$ aussortiert, was durch einen Schalter 54 in Fig. 2 dargestellt ist. Diejenigen Intensitätsvektoren $\bar{I}$, die nicht aussortiert wurden, werden durch eine Normierungseinheit 56 normiert, was der Projektion eines n-dimensionalen Problems auf die (n-1)-Dimensionale Teilfläche der Einheitshyperkugel im positiven Quadranten gleichkommt, wobei eine Position Korrelationsspuren im Originalraum hinreichend beschreibt. Die normierten Intensitätsvektoren $\bar{I}$, werden über ein zusätzliches Filterelement 57 dem lernenden Vektorquantisierer 58 zugeleitet. Der adaptiv ausgeprägte Vektorquantisierer 58 misst die Ähnlichkeit der einlaufenden Vektoren mit den Vektoren aus dem Code-Book und macht die ähnlichsten noch ähnlicher. Durch die Initialisierung und das Lernverfahren trackt der Vektorquantisierer 58 die Code-Book-Vektoren derart, dass sie die Daten bestmöglich approximieren.

Vektorquantisierer im allgemeinen bilden das Bindeglied zwischen kontinuierlichen vektoriellen Verteilungen (hier Intensitäten) mit einer diskreten Welt von Repräsentationen und sind Stand der Technik in der Nachrichtentechnik und Signalverarbeitung. Vektorquantisierer werden insbesondere zur verlustbehafteten Übertragung vektorieller Signale genutzt (siehe unter anderem Moon and Stirling, Mathematical Methods and Algorithms for Signal Processing. London: Prentice Hall, 2000). Der hier genutzte Vektorquantisierer (58) hat verhältnismäßig wenig interne Code-Book-Vektoren, da eine hohe Kompression der Messdaten auf ein sehr einfaches Modell mit hohem Verlust durchgeführt wird und ist adaptiv. Die zugeleiteten Intensitätsvektoren werden mit allen Code-Book-Vektoren gleichzeitig verglichen, wobei eine Teilmenge der ähnlichsten Code-Book-Vektoren ausgewählt und angepasst werden. Das Ähnlichkeitsmaß und die Teilmenge ist ein Freiheitsgrad des Verfahrens und kann variieren. Die Selektion wird dem aktuellen Intensitätsvektor $\bar{I}$ etwas ähnlicher gemacht. Im einfachsten Fall ist dies immer nur der ähnlichste Code-Book-Vektor. Dies geschieht durch mathematische Verfahren wie Abstandsmessungen mit Vektornormen, lokaler Aggregation, rekursiv gleitende Mittelwertbildung, ist jedoch für unterschiedliche Typen lernfähiger Vektorquantisierer unterschiedlich gestaltet. Für eine erfindungsgemäße Ausgestaltung kommt eine Vielzahl unterschiedlicher Verfahren in Betracht und hat in der realen Ausgestaltung extrem viele Freiheitsgerade. Die Ausgestaltungsmöglichkeiten sind dem Fachmann hinreichend bekannt und werden nachfolgend kurz umrissen.

Neben den hier nicht direkt praktikablen Code-Book-Design-Verfahren der klassischen Clusteranalyse (vergl. Ripley, Pattern Recognition and Neural Networks, Cambridge: CUP, 1996) - die wir dennoch hier nicht explizit ausschließen wollen - bieten sich insbesondere biologisch motivierte neuronale Netze an. Luo und Unbehauen schlagen unter anderem eine Klasse von wettbewerbslernenden neuronalen Architekturen für die Aufgabe der Vektorquantisierung vor (Luo und Unbehauen, Applied Neural Networks for Signal Processing, Cambridge: CUP, 1997). Derartige Verfahren resultieren aus der Simulation repräsentationsbildender Denkprozesse durch Wettbewerbslernen einzelner Neuronen und erzeugen auch in der stark vereinfachten Modellbildung der Informatik schon gute Repräsentationen. Neuere Arbeiten wie zum Beispiel die Dissertation von Bernd Fritzke (Bernd Fritzke, Vektorbasierte Neuronale Netze, Aachen: Shaker, 1998) weisen eine ganze Sammlung unterschiedlicher, brauchbarer Verfahren auf, die im Kontext dieser Meldung zum Ziel führen. Die wesentlichen Unterscheidungskriterien sind die Art und Weise wie die Code-Book-Vektoren an die präsentierte Intensitätsverteilung angepasst werden. Diese Adaption wird in der Literatur neuronaler Netze als Lernverfahren bezeichnet. Die für diese Erfindung essentielle Eigenschaft ist jedoch die Repräsentationsbildung mit der Kernidee des Wettbewerbs unterschiedlicher Instanzen um präsentierte Reize und nicht ein geeignetes mathematische Verfahren bzw. eine simulationsähnliche Annäherung an biologische Vorgänge. Die konkrete Durchführung der Repräsentationsbildung sowie Modelldetails, wie Topologien zwischen Repräsentationen, Topologieerhaltung zwischen Repräsentation und Intensitätsraum, Lern- bzw. Adaptionsregeln, sind dem Fachmann hinreichend bekannt und im Rahmen dieser Erfindung nicht näher spezifiziert. Die wichtigsten dieser an Wettbewerbslernen angelehnten und dem Erfinder bekannten Adaptionsverfahren sind im folgenden skizziert und im Detail der Literatur zu entnehmen.

Die direkte Simulation von Wettbewerbslernen zwischen Neuronen kann zu einer Ausprägung des Vektorquantisierers 58 führen. Zu diesem Zweck wird einer Menge von Neuronen der Eingangsvektor präsentiert, wobei zusätzlich eine laterale Verbindung zwischen den Neuronen zugeschaltet wird, deren Wichtung lokale Verbindungen verstärkt (positive Verbindung) und weiter entfernte hemmt (negative Verbindung). Die Gesamtstruktur wird einer Hebbschen Lernregel ausgesetzt, die Korrelationen zwischen Ein- und Ausgängen verstärkt. Diese Art der Durchführung ist als einleitendes Gedankenmodell in fast allen Lehrbüchern über neuronale Netze zu finden (vergl. Haykin, Neural Networks, New York: MacMaster University Press, 1994) und wird nur selten für reale Systeme genutzt.

Sogenanntes hartes Wettbewerbslernen initialisiert die Code-Book-Vektoren zufällig mit Werten hinreichender Wahrscheinlichkeit. Für jeden dem Vektorquantisierer 58 zugeleiteten normierten Intensität $\bar{i}$ wird aus der Menge der Code-Book-Vektoren $\{\bar{\omega}_i\}$ ein Gewinner gemäß einer Vorschrift $\bar{\omega}$ = winner $(\bar{i})$ ermittelt. In der Regel wird zur Fehlerminimierung der euklidische Abstand zwischen Reiz $\bar{i}$ und Code-Book $\{\bar{\omega}_i\}$ zur Gewinnerermittlung gemäß

$$\bar{\omega} = \min\left(\left\|\bar{i} - \bar{\omega}_i\right\|\right)$$

genutzt. Gemäß der Verarbeitungsvorschrift

$$\bar{\omega} = \bar{\omega} + \varepsilon(t)(\bar{i} - \bar{\omega})$$

wird dieser Gewinner adaptiert. In diesem Kontext ist

$\varepsilon(t)$ eine Lernrate, die oft über die Betriebsdauer des Vektorquantisierers 58 reduziert wird. Bei konstanter Lernrate bleibt der Vektorquantisierer 58 adaptiv. Bei Nutzung einer zu der Anzahl Gewinne invers proportionalen Lernrate erhält man das sogenannte "k-Means" Verfahren, das sich exakt in die Mittelwerte der Verteilung legt. Durch die Wahl exponentiell abnehmender Lernraten kann man beliebige Zwischenzustände erzeugen, aber auch andere Varianten werden angewandt.

Beim sogenannten weichen Wettbewerbslernen werden nicht nur die Gewinner adaptiert, sondern weitere, eventuell sogar alle Code-Book-Vektoren.

Eine Ausprägung ist der sogenannte "Neuronales Gas" - Algorithmus, bei dem ein Ranking der Gewinner auf der Basis der Gewinnerfunktionen, auch bei harten Wettbewerbslernverfahren, durchgeführt wird. Auf der Basis dieses Ranking berechnet eine Adaptionsfunktion den Grad der Adaption wobei der Gewinner mit dem besten Rank mehr adaptiert wird als ein Gewinner mit geringerem Rank. Oft wird der Adaptionseinfluss über die Zeit reduziert. In einer Abwandlung namens "Growing Neural Gas" wird über ein Informationstechnisches bzw. Fehlerminimierungskriterium die Anzahl der Vektoren im Code-Book erhöht, bis eine hinreichende Operation gewährleistet ist.

Bei der Ausprägung "Selbstorganisierende Merkmalskarte" wird den Code-Book-Vektoren eine Topologie überlagert. Während des Lernvorgangs wird immer eine Nachbarschaft des Gewinners mitadaptiert, wobei in der Regel nähere Nachbarn mehr und weiter entfernte Nachbarn weniger adaptiert werden und der Einfluss des Nachbarschaftslernens über die Zeit reduziert wird. Dies ist vergleichbar mit einem x-dimensionalen Gummituch, das man in die Verteilung knautscht, ohne dass es zerreißt. Der Vorteil dieses Verfahrens ist die Erhaltung topologischer Eigenschaften.

Neuere Ansätze charakterisieren sich durch Mischformen, in denen Topologieerhaltung durch den Vektoren überlagerte Graphen wie bei der Selbstorganisierenden Merkmalskarte mit Wachstumskriterien wie beim Growing Neural Gas verknüpft werden. Beispiele sind z.B. "Growing Cell Structures", "Growing Grid".

Die Vektoren im Code-Book und das Adaptionsverfahren werden in einem derartigen Setup vor dem Experiment bei der Initialisierung vorgegeben. Dies kann von Anwendung zu Anwendung variieren. Bei der Belegung des Vektorquantisierers 58 gibt es mehrere Varianten: Ein Vektorquantisierer 58, der exakt so viele Code-Book-Vektoren hat wie Kanäle und die in der Reihenfolge der Kanäle mit orthonormalen Einheitsvektoren des Kanalraums vorinitialisiert sind. Ferner ist ein Vektorquantisierer 58 denkbar, der für jeden Kanal einen orthonormalen Einheitsvektor und für jeden möglichen Mischzustand einen schrägen (diagonal im Signalraum) Einheitsvektor hat. Diese Variante arbeitet statistisch stabiler bei Auftreten von Ko-Lokalisationen. Ferner lässt sich ein Zähler (nicht dargestellt), der ermittelt, wie häufig welcher Code-Book-Vektor verändert wurde, dazu nutzen, um Ko-Lokalisationen aufzuspüren. Der Zähler kann für einfache statistische Signifikanztests herangezogen werden, da die Anzahl der Adaptionsschritte die Häufigkeit korrespondierender Messwerte entspricht.

Fig. 3 beschreibt die Handhabung und die Verarbeitung der Messwerte, die von den mehreren Detektoren 19 gewonnen werden. Die Detektoren 19 sind in diesem Ausführungsbeispiel als PMTs (Photo Multiplier Tubes) dargestellt. Die Messwerte werden zur Bewertung lokaler Korrelationen von den PMTs einer elektronischen Einrichtung 45 zugeführt, das die entsprechende Bewertung, wie oben beschreiben, durchführt. Der Einrichtung 45 ist ein Mittel 62 zum Auswählen einer Untermenge aus der Vielzahl der Code-Book-Vektoren nachgeschaltet. Die ausgewählten Code-Book-Vektoren werden einer Auswerte- und Visualisierungseinheit zugeführt, die z.B. als Display 27 des Rechners 34 ausgebildet sein kann. Die Auswerte- und Visualisierungseinheit ist mit einem Spektralphotometer 64 verbunden. Das Spektralphotometer 64 kann z.B. als ein Multibanddetektor ausgebildet sein, der an Hand der ermittelten Korrelationsrepräsentationen das Übersprechen ermittelt und eine automatische Einstellung durchführt, um das Übersprechen der einzelnen Detektionskanäle zu minimieren.

Die ausgelesenen Code-Book-Vektoren werden zur Bewertung der Einstellung des Spektralphotometers 64 genutzt. Dabei ist zu beachten, dass der Winkel zwischen zwei Code-Book-Vektoren im Idealfall 90° sein soll. Diese Tatsache kann man zur Berechnung einer monotonen linearen Gütefunktion benutzen wobei 0° einer Güte von 0% und 90° einer Güte von 100% entspricht. Diese Güte kann man in einen Stellalgorithmus zum Tunen des Spektralphotometers 64 benutzen. Die Einrichtung 45 ist in dieser Anordnung bevorzugt in FPGA- oder DSP-Technologie realisiert. Die Auswertung könnte bevorzugt ebenso auf dem Rechner 34, der ebenfalls als Steuerrechner eingesetzt werden kann, oder auf dem FPGA, DSP, erfolgen, da hier das Zeitverhalten nicht kritisch ist.

Alternativ können die Code-Book-Vektoren auch auf dem Display 27 angezeigt werden, um den Benutzer über die Qualität der Messung aufzuklären. Dabei werden die darzustellenden Code-Book-Vektoren in ein Koordinatensystem eingetragen. An Hand der Neigung der Code-Book-Vektoren zu den Koordinatenachsen kann auf einfache Weise die Qualität der Messung abgelesen werden. Die Auswahl der Untermenge der Code-Book-Vektoren ist auf diese Code-Book-Vektoren beschränkt, die den Achsen eines Koordinatensystems am nächsten sind. Dabei repräsentiert jeweils eine Koordinatenachse die Detektion in einem Detektionskanal des Multibanddetektors. Die Neigung der Code-Book-Vektoren zu den Koordinatenachsen sowie untereinander wird zur Ermittlung des Übersprechens der einzelnen Detektionskanäle herangezogen. Bei 2-dimensionalen Selektionen kann dies direkt zur Visualisierung herangezogen werden. Ferner ist zu bemerken, dass zur visuellen Darstellung auch tripelweise die Achsen des Koordinatensystems darstellbar sind, wobei die nächsten zu diesen Achsen gelegenen Code-Book-Vektoren in entsprechender Weise bezüglich der Koordinatenachsen eintragbar sind.

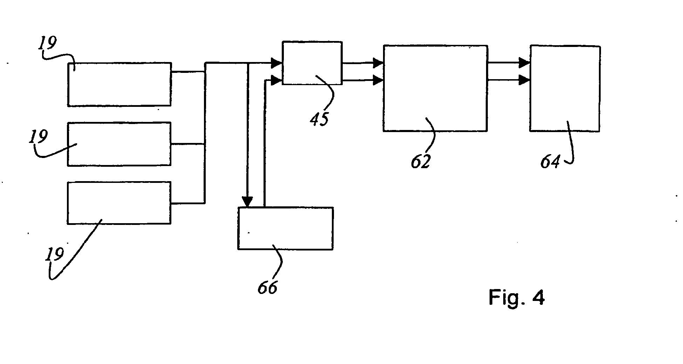

In Fig. 4 ist schematisch eine Anordnung gezeigt, die die Bleichrate in dem zu untersuchenden Objekt 15 misst. Hierzu detektiert man denselben Kanal zeitlich versetzt hintereinander, und baut aus den zeitlich versetzten Daten den Vektor zusammen. Als Ergebnis findet man Strukturen mit unterschiedlicher Bleichrate auf unterschiedlichen Geraden, die durch die unterschiedlichen Vektoren repräsentiert sind. Hierzu muss ein Speicherelement 66 hinzugezogen werden. Wie in Fig. 4 dargestellt, werden die Werte von den Detektoren 19, wie z.B. PMTs, gespeichert. Das dargestellte Ausführungsbeispiel verwendet drei Detektoren 19, was aber in keiner Weise als eine Beschränkung angesehen werden soll. Die Messdaten von den Detektoren 19 werden immer pro aufgenommenes Bild in dem Speicherelement 66 abgelegt. Dabei werden immer die Daten eines Bildes, das zum Zeitpunkt t aufgenommen wird mit den Daten des Bildes, das zum Zeitpunkt t-1 aufgenommen wurde, der Einrichtung 45 zugeführt. Das Speicherelement 66 muss hierzu pixelsynchron arbeiten. Es ist dem Fachmann hinreichend bekannt, dass eine derartige Synchronisation auch Linen-, Frame- oder Volumen basiert erfolgen kann und nur Orts-synchron an die Scanbewegung des Lichtstrahls 3 gekoppelt werden muss. Ein Ausführungsbeispiel ist, ein an die Einrichtung 45 gekoppeltes RAM als Speicherelement 66 zu verwenden, oder dass das Speicherelement 66 direkt im Rechner 34 implementiert ist. Wie in Fig. 3 bereits dargestellt, ist der Einrichtung 45 das Mittel 62 zum Auswählen einer Untermenge aus der Vielzahl der Code-Book-Vektoren nachgeschaltet. Die ausgewählten Code-Book-Vektoren werden einer Auswerte- und Visualisierungseinheit zugeführt, die z.B. als Display 27 des Rechners 34 ausgebildet sein kann. Die Bleichrate lässt sich an Hand der ausgewählten Code-Book-Vektoren ablesen. Aus der Neigung eines Code-Book-Vektors zum Zeitpunkt t im Vergleich zur Neigung eines Code-Book-Vektors zum Zeitpunkt t+1 im Koordinatensystem kann die Bleichrate bzw. das Bleichverhalten bestimmt werden. Die Information über die Bleichrate kann auch für die Einstellungen des Systems genutzt werden, da die Lichtsensitivität der in der Probe vorhandenen Farbstoffe direkt ermittelt wird. Auch eine textuelle Information an den Benutzer durch das Display 27 ist denkbar.

Ebenso ist es mit der Anordnung aus Fig. 4 möglich die Auswirkung von aktiven Systemparametern auf die Messung zu bestimmen. Durch das Verstellen von Systemparametern zwischen zwei Messungen mit lassen sich Aussagen über lokale Veränderung in der Probe treffen, da sich Korrelationsmaße und deren Repräsentationen verändern. Ein Beispiel ist die Veränderung der Lichtmenge auf der Probe durch Veränderung der Laserleistung, Vergrößerung der AOTF Abschwächung oder Vergrößerung des Pinholes. Solange keine Sättigungen auftreten, bleiben die Repräsentationen von Korrelationsspuren erhalten. Bei Sättigungseffekten verändern sich diese. Dies ist sinnvoll, um eine optimale Einstellung des Systems zu finden (z.B. Detektion der Sättigung von Farbstoffen).

Ferner beinhalten die Code-Book-Vektoren im wesentlichen die nötige Information, um die Messdaten zu korrigieren. Zu diesem Zweck müssen diese zu einer Matrix zusammengefasst und danach invertiert werden. Die Zusammenfassung zur Matrix kann variieren, je nachdem, ob eine Informationsseparation oder eine Korrektur parasitärer spektraler Übersprechphänomene angestrebt wird, die in der Regel nur von Kanälen hoher zu Kanälen niedriger Energie wirkt. Die Invertierung einer Matrix ist Stand der Technik. Dies kann durch ein zusätzliches Elektronikbauteil (nicht dargestellt) im Datenpfad oder im Rechner 34 erfolgen. Der Korrektur zugänglich sind Crosstalk, Intensitätsreduktion durch Bleichen und Kombinationen hiervon.

Die Code-Book-Vektoren beinhalten zusätzlich Information über das Material im Probenvolumen. Zu diesem Zweck klassifiziert man die Messwerte zurück auf den nächsten Codebook-Eintrag. Derartige Operationen werden in der Regel im Rechner 34 durchgeführt. Bei geeigneter Visualisierung derartiger Bilddaten erhält man eine Landkarte unterschiedlicher Materialien im Bild. Diese ist nicht zu verwechseln mit den in US Patent 5,719,024 genutzten mathematischen Verfahren der Dekorrelation, die dort als Vorverarbeitungsschritt durchgeführt werden. Dergleichen wird hier nicht explizit benötigt.

Es ist selbstverständlich, dass Änderungen und Abwandlungen durchgeführt werden können, ohne dabei den Schutzbereich der nachstehenden Ansprüche zu verlassen.

**Bezugszeichenliste:**

| | |
|---|---|
| 1 | Beleuchtungssystem |
| 2 | Scanmikroskop |
| 3 | Lichtstrahl |
| 5 | Strahlteiler |
| 7 | Scanmodul |
| 9 | Scanspiegel |
| 11 | Positionssensor |
| 13 | Mikroskopoptik |
| 15 | Objekt |
| 17 | Lichtstrahl |
| 19 | Detektor |
| 21 | Detektionssignale |
| 23 | Verarbeitungseinheit |
| 25 | Positionssignale |
| 27 | Display |
| 29 | Einstellelement |
| 31 | Einstellelement |
| 33 | Eingabeeinheit |
| 34 | Rechner |

| | |
|---|---|
| 35 | Abbild |
| 37 | Leitung |
| 39 | Beleuchtungspinhole |
| 41 | Detektionspinhole |
| 45 | Einrichtung |
| 49 | Mittel zum Bilden eines Intensitätsvektors |
| 50 | Mittel zum Berechnen |
| 52 | Vergleichselement |
| 54 | Schalter |
| 56 | Normierungseinheit |
| 57 | Filterelement |
| 58 | Vektorquantisierer |
| 60 | Mittel zum Auslesen |
| 62 | Mittel zum Auswählen |
| 64 | Spektralphotometer |
| 66 | Speicherelement |
| $\underline{I}_1, \underline{I}_2, ..., \underline{I}_n$ | Intensitäten |
| $\underline{I}$ | Intensitätsvektor |
| SW | Schwellwert |

**Patentansprüche**

1. Verfahren zur Ermittlung von Prozessgrößen für ein Mikroskopsystem, wobei das Verfahren durch folgenden Schritte gekennzeichnet ist:

   a) Zusammenfassen der von einer Vielzahl von Detektoren (19) ermittelten Intensitäten aus unterschiedlichen Spektralbereichen eines Messvorgangs zu einem Intensitätsvektor ($\underline{I}$),
   b) Berechnen einer Norm des Intensitätsvektors ($\underline{I}$),
   c) Aussondern derjenigen Intensitätsvektorenderen, deren Norm kleiner ist als ein vorgebbarer Schwellwert (SW), damit diese Vektoren im weiteren Verfahren unberücksichtigt bleiben,
   d) Normieren der Intensitätsvektoren ($\underline{I}$),
   e) Zuleiten der Intensitätsvektoren zu einem Vektorquantisierer (58) und Verarbeitung der Intensitätsvektoren ($\underline{I}$) durch den Vektorquantisierer (58), und
   f) Auslesen von Code-Book-Vektoren aus dem Vektorquantisierer (58).

2. Verfahren nach Anspruch 1, **dadurch gekennzeichnet, dass** das Berechnen der Norm der euklidische Abstand zu einem Koordinatenursprung ist.

3. Verfahren nach Anspruch 1, **gekennzeichnet durch** die folgenden Schritte:

   ○ Auswählen einer Untermenge aus der Vielzahl der Code-Book-Vektoren, und
   ○ Zuführen der ausgewählten Code-Book-Vektoren an eine Auswerte- und Visualisierungseinheit.

4. Verfahren nach Anspruch 3, **dadurch gekennzeichnet, dass** die Neigung der Code-Book-Vektoren zu den Koordinatenachsen sowie untereinander zur Ermittlung des Übersprechens der einzelnen Detektionskanäle herangezogen wird.

5. Verfahren nach Anspruch 3, **dadurch gekennzeichnet, dass** tupel- oder tripelweise die Achsen des Koordinatensystems visuell dargestellt werden und die nächsten zu diesen Achsen gelegenen Code - Book - Vektoren eingetragen werden.

6. Verfahren nach Anspruch 3, **dadurch gekennzeichnet, dass** jeder visuellen Darstellung der Achsen des Koordinatensystems ein Zähler zugeordnet ist, der zur Visualisierung der Signifikanz des durch den jeweiligen Code-Book-Vektor repräsentierten Signalanteils dient.

7. Verfahren nach Anspruch 1, **kennzeichnet durch** die folgenden Schritte:

   ◦ Erfassen der Ortskoordinaten in einem Objekt (15) während des Scanvorgangs und der den Ortskoordinaten zugeordneten Intensitäten ($I_1$, $I_2$, ... ,$I_n$),
   ◦ Vergleichen der Intensitätsvektoren ($\overline{I}$) mit den Code-Book-Vektoren, und
   ◦ Klassifikation der Intensitätsvektoren ($\overline{I}$) auf den nächsten Code-Book-Vektor.

8. Verfahren nach Anspruch 1, **gekennzeichnet durch** die folgenden Schritte, die vor den Schritten a) bis f) ausgeführt werden:

   ◦ Zeitversetztes, blockbasiertes Zwischenspeichen der Intensitätsvektoren, und
   ◦ Bilden von Vektoren aus den jeweils aktuellen Intensitätsvektor und dem vor dem jeweils aktuellen und zwischengespeicherten Intensitätsvektor aufgenommenen zeitversetzten Intensitätsvektor, wobei beide Vektoren vom selben Ort des Objekts (15) stammen.

9. Verfahren nach Anspruch 1, **gekennzeichnet durch** die folgenden Schritte:

   ◦ Berechnen einer Korrekturmatrix aus den Code-Book-Vektoren und
   ◦ Anwendung der Korrekturmatrix auf die aktuell gemessenen Intensitätsvektoren bei gleichzeitigen Bildaufbau.

10. Anordnung zur Ermittlung von Prozessgrößen in einem Mikroskopsystem, **gekennzeichnet durch**:

   a) Mittel (49) zum Zusammenfassen der von einer Vielzahl von Detektoren (19) ermittelten Intensitäten ($I_1$, $I_2$, ... ,$I_n$) aus unterschiedlichen Spektralbereichen eines Messvorgangs zu einem Intensitätsvektor ($\overline{I}$),
   b) Mittel (50) zum Berechnen einer Norm des Intensitätsvektors ($\overline{I}$),
   c) Mittel (52) zum Aussondern derjenigen Intensitätsvektoren deren Norm kleiner ist als ein vorgebbarer Schwellwert (*SW*),
   d) Mittel (56) zum Normieren der Intensitätsvektoren,
   e) einen Vektorquantisierer (58) zum Verarbeiten der Intensitätsvektoren und
   f) Mittel (60) zum Auslesen von Code-Book-Vektoren aus dem Vektorquantisierer (58).

11. Anordnung nach Anspruch 10, **dadurch gekennzeichnet, dass** die Mittel (56) zum Normieren die Berechnung des euklidischen Abstandes zu einem Koordinatenursprung durchführen.

12. Anordnung nach Anspruch 10, **dadurch gekennzeichnet, dass** der Vektorquantisierer (58) als Learning Vektorquantiziser oder als wettbewerbslernendes neuronales Netz ausgebildet ist oder aus diesem im Kontext der mathematischen Annäherung ab- oder hergeleitet werden kann.

13. Anordnung nach Anspruch 10, **dadurch gekennzeichnet, dass** ein Multibanddetektor vorgesehen ist, der an Hand des ermittelten Übersprechens eine automatische Einstellung durchführt, um das Übersprechen der einzelnen Detektionskanäle zu minimieren, wobei eine Auswahl der Untermenge der Code-Book-Vektoren auf diese Code-Book-Vektoren beschränkt ist, die den Achsen eines Koordinatensystems am nächsten sind, wobei jeweils eine Koordinatenachse die Detektion in einem Detektionskanal repräsentiert, und dass die Neigung der Code-Book-Vektoren zu den Koordinatenachsen sowie untereinander zur Ermittlung des Übersprechens der einzelnen Detektionskanäle heranziehbar ist.

14. Anordnung nach Anspruch 13, **dadurch gekennzeichnet, dass** ein Mittel (27) zur visuellen Darstellung vorgesehen ist, und dass tupel- oder tripelweise die Achsen des Koordinatensystems darstellbar und die nächsten zu diesen Achsen gelegenen Code-Book-Vektoren eintragbar sind, oder dass paarweise die Achsön des Koordinatensystems darstellbar und die nächsten zu diesen Achsen gelegenen Code-Book-Vektoren eintragbar sind.

15. Anordnung nach einem der Ansprüche 13 oder 14, **dadurch gekennzeichnet, dass** jeder visuellen Darstellung der Achsen des Koordinatensystems ein Zähler zugeordnet ist, der die Signifikanz den durch den jeweiligen Code-Book-Vektor repräsentierten Signalanteils verifiziert.

16. Anordnung nach Anspruch 10, **dadurch gekennzeichnet, dass**

   ◦ Mittel zum Erfassen der Ortskoordinaten eines Objekts (15) während des Scanvorgangs und der den Ortskoordinaten zugeordneten Intensitäten,
   ◦ Mittel zum Vergleichen der Intensitätsvektoren mit den Code-Book-Vektoren, und
   ◦ Mittel zur Klassifikation der Intensitätsvektoren auf den nächsten Code-Book-Vektor vorgesehen sind.

17. Anordnung nach Anspruch 10, **dadurch gekennzeichnet, dass**

   ◦ Mittel (66) zum zeitversetzten, blockbasierten Zwischenspeicher der Intensitätsvektoren, und
   ◦ Mittel (45) zum Bilden von Vektoren aus den jeweils aktuellen Intensitätsvektor und dem vor dem jeweils aktuellen und zwischengespeicherten Intensitätsvektor aufgenommenen zeitversetzten Intensitätsvektor vorgesehen sind, wobei beide Vektoren vom selben Ort des Objekts (15) stammen.

18. Anordnung nach Anspruch 17, **dadurch gekennzeichnet, dass** Mittel zum Auswerten der die Neigung der Code-Book-Vektoren vorgesehen sind, um das Bleichverhalten oder Einflüsse aktiver Stellparameter zu ermitteln und auf dem Mittel (27) zur visuellen Darstellung zu visualisieren.

19. Anordnung nach Anspruch 10, **dadurch gekennzeichnet, dass**

   o Mittel zum Berechnen einer Korrekturmatrix aus den Code-Book-Vektoren und
   o Mittel zur Anwendung der Korrekturmatrix auf die aktuell gemessenen Intensitätsvektoren bei gleichzeitigen Bildaufbau vorgesehen sind.

20. System zur Ermittlung von Prozessgrößen in einem Mikroskopsystem, umfassend ein abtastendes Mikroskop (2) zum Führen eines Lichtstrahls (3) parallel oder sequentiell über ein Objekt (15), mehrere Detektoren (19) zum Ermitteln von Intensitäten aus unterschiedlichen Spektralbereichen aus dem vom Objekt (15) ausgehenden Licht (17), eine Verarbeitungseinheit (23), einen Rechner(34), eine Eingabeeinheit (33) und ein Display (27), **dadurch gekennzeichnet, dass**:

   a) in der Verarbeitungseinheit (23) Mittel (49) zum Zusammenfassen der von Detektoren (19)

ermittelten Intensitäten ($I_1$, $I_2$, ... ,$I_n$) aus unterschiedlichen Spektralbereichen eines Messvorgangs zu einem Intensitätsvektor,
   b) Mittel (50) zum Berechnen einer Norm des Intensitätsvektors,
   c) Mittel (52) zum Aussondern derjenigen Intensitätsvektoren deren Norm kleiner ist als ein vorgebbarer Schwellwert (SW),
   d) Mittel (56) zum Normieren der Intensitätsvektoren,
   e) ein Vektorquantisierer (58), zum Verarbeiten der Intensitätsvektoren und
   f) Mittel (60) zum Auslesen von Code-Book-Vektoren aus dem Vektorquantisierer (58) vorgesehen sind.

21. System nach Anspruch 20, **dadurch gekennzeichnet, dass**

   o Mittel (62) zum Auswählen einer Untermenge aus der Vielzahl der Code-Book-Vektoren, und
   o Mittel zum Zuführen der ausgewählten Code-Book-Vektoren an eine Auswerte- und Visualisierungseinheit vorgesehen sind.

22. System nach Anspruch 21, **dadurch gekennzeichnet, dass** die Visualisierungseinheit ein Display (27) ist, auf dem in mindestens einem Fenster die Code-Book-Vektoren visuell in einen Koordinatensystem darstellbar sind.

23. System nach Anspruch 21, **dadurch gekennzeichnet, dass** ein Multibanddetektor vorgesehen ist, der an Hand des ermittelten Übersprechens eine automatische Einstellung durchführt, um das Übersprechen der einzelnen Detektionskanäle zu minimieren, wobei eine Auswahl der Untermenge der Code-Book-Vektoren auf diese Code-Book-Vektoren beschränkt ist, die den Achsen eines Koordinatensystems am nächsten sind, wobei jeweils eine Koordinatenachse die Detektion in einem Detektionskanal repräsentiert, und das die Neigung der Code-Book-Vektoren zu den Koordinatenachsen sowie untereinander zur Ermittlung des Übersprecheris der einzelnen Detektionskanäle heranziehbar ist.

24. System nach einem der Ansprüche 20 bis 23, **dadurch gekennzeichnet, dass** jeder visuellen Darstellung der Achsen des Koordinatensystems auf dem Display (27) ein Zähler zugeordnet ist, der die Signifikanz des durch den jeweiligen Code-Book-Vektor repräsentierten Signalanteils verifiziert.

25. System nach Anspruch 20, **dadurch gekennzeichnet, dass**

   ◦ Mittel zum Erfassen der Ortskoordinaten einer Probe während des Scanvorgangs und der den Ortskoordinaten zugeordneten Intensitäten,
◦ Mittel zum Vergleichen der Intensitätsvektoren mit den Code-Book-Vektoren, und
◦ Mittel zur Klassifikation der Intensitätsvektoren auf den nächsten Code-Book-Vektor vorgesehen sind.

26. System nach Anspruch 20, **dadurch gekennzeichnet, dass**

o Mittel (66) zum zeitversetzten, blockbasierten Zwischenspeichern der Intensitätsvektoren, und
o Mittel (45) zum Bilden von Vektoren aus dem jeweils aktuellen Intensitätsvektor und dem vor dem jeweils aktuellen und zwischengespeicherten Intensitätsvektor aufgenommenen zeitversetzten Intensitätsvektor vorgesehen sind, wobei beide Vektoren vom selben Ort des Objekts (15) stammen.

27. System nach Anspruch 26, **dadurch gekennzeichnet, dass** Mittel zum Auswerten der Neigung der Code-Book-Vektoren vorgesehen sind, um das Bleichverhalten oder Einflüsse aktiver Stellparameter zu ermitteln und auf dem Display (27) zu visualisieren.

**Claims**

1. Method for ascertaining process variables for a microscope system, the method is **characterized by** the following steps:

a) combining into one intensity vector ($\overline{I}$) the intensities ascertained by a plurality of detectors (19) from different spectral regions of a measurement operation;
b) calculating a norm of the intensity vector ($\overline{I}$);
c) discarding those intensity vectors whose norm is less than a definable threshold value (*SW*), so that said vectors are left out of consideration in the remainder of the method;
d) normalizing the intensity vectors ($\overline{I}$);
e) delivering the intensity vectors to a vector quantizer (58) and processing the intensity vectors ($\overline{I}$) using the vector quantizer (58); and
f) reading Code Book Vectors out of the vector quantizer (58).

2. Method as defined in Claim 1, **characterized in that** the calculation of the norm is based on the Euclidean distance to a coordinate origin.

3. Method as defined in Claim 1, **characterized by** the following steps:

- selecting a subset from the plurality of the Code Book Vectors; and
- conveying the selected Code Book Vectors to an analysis and visualization unit.

4. Method as defined in Claim 3, **characterized in that** the slope of the Code Book Vectors relative to the coordinate axes and to each other is employed to ascertain the crosstalk of the individual detection channels.

5. Method as defined in Claim 3, **characterized in that** the axes of the coordinate are visually depicted in double or triple fashion, and the Code Book Vectors located nearest to said axes are plotted.

6. Method as defined in Claim 3, **characterized in that** a counter that serves to visualize the significance of the signal component represented by the particular Code Book Vector is allocated to each visual depiction of the axes of the coordinate system.

7. Method as defined in Claim 1, **characterized by** the following steps:

- acquiring the local coordinates in an object (15) during the scanning operation, and the intensities ($I_1$, $I_2$, ...$I_n$) associated with the local coordinates;
- comparing the intensity vectors ($\overline{I}$) to the Code Book Vectors; and
- classifying the intensity vectors ($\overline{I}$) onto the nearest Code Book Vector.

8. Method as defined in Claim 1, **characterized in that** the following steps are performed before steps a) through f):

- time-offset, block-based intermediate storage of the intensity vectors; and
- formation of vectors from the particular current intensity vector and from the time-offset intensity vector acquired before the particular current and intermediately stored intensity vector, the two vectors deriving from the same location in the object (15).

9. Method as defined in Claim 1, **characterized in that** the following steps are performed:

- calculating a correction matrix from the Code Book Vectors; and
- applying the correction matrix to the currently measured intensity vectors with simultaneous image construction.

10. Arrangement for ascertaining process variables in a microscope system, **characterized by**:

a) means (49) for combining into one intensity vector ($\bar{I}$) the intensities ($I_1$, $I_2$, ...$I_n$) ascertained by a plurality of detectors (19) from different spectral regions of a measurement operation;

b) means (50) for calculating a norm of the intensity vector ($\bar{I}$);

c) means (52) for discarding those intensity vectors whose norm is less than a definable threshold value ($SW$);

d) means (56) for normalizing the intensity vectors;

e) a vector quantizer (58) for processing the intensity vectors; and

f) means (60) for reading Code Book Vectors out of the vector quantizer (58).

11. Arrangement as defined in Claim 10, **characterized in that** the means (58) for normalizing perform the calculation of the Euclidean distance to a coordinate origin.

12. Arrangement as defined in Claim 10, **characterized in that** the vector quantizer (58) is embodied as a learning vector quantizer or as a competitively learning neural network, or can be derived or inferred therefrom in the context of a mathematical approximation.

13. Arrangement as defined in Claim 10, **characterized in that** a multi-band detector is provided that performs an automatic adjustment on the basis of the ascertained crosstalk in order to minimize the crosstalk of the individual detection channels, a selection of the subset of the Code Book Vectors being limited to those Code Book Vectors located nearest to the axes of a coordinate system, each coordinate axis representing detection in one detection channel; and the slope of the Code Book Vectors with respect to the coordinate axes and to one another can be employed to ascertain the crosstalk of the individual detection channels.

14. Arrangement as defined in Claim 18, **characterized in that** a visual depiction means is provided; and the axes of the coordinates can be depicted in double or triple fashion, and the Code Book Vectors located nearest to said axes can be plotted or the axes of the coordinate system can be visually depicted in pairs, and the Code Book Vectors located nearest to said axes can be plotted.

15. Arrangement as defined in Claim 13 or 14, **characterized in that** a counter that verifies the significance of the signal component represented by the particular Code Book Vector is allocated to each visual depiction of the axes of the coordinate system.

16. Arrangement as defined in Claim 10, **characterized in that**

- means for acquiring the local coordinates of an object (15) during the scanning operation, and the intensities associated with the local coordinates;
- means for comparing the intensity vectors to the Code Book Vectors; and
- means for classifying the intensity vectors onto the nearest Code Book Vector
are provided.

17. Arrangement as defined in Claim 10, **characterized in that**

- means (66) for time-offset, block-based intermediate storage of the intensity vectors; and
- means (45) for forming vectors from the particular current intensity vector and from the time-offset intensity vector acquired before the particular current and intermediately stored intensity vector, the two vectors deriving from the same location in the object (15),
are provided.

18. Arrangement as defined in Claim 17, **characterized in that** means are provided for analyzing the slopes of the Code Book Vectors, in order to ascertain and display on the visual depiction means (27) the bleaching behavior or influences of active setting parameters.

19. Arrangement as defined in Claim 10, **characterized in that**

- means for calculating a correction matrix from the Code Book Vectors; and
- means for applying the correction matrix to the currently measured intensity vectors with simultaneous image construction
are provided.

20. System for ascertaining process variables in a microscope system comprising a scanning microscope (2) for guiding a light beam (3) in parallel or sequential fashion over an object (15); multiple detectors (19) for ascertaining, from the light (17) emerging from the object (15), intensities from different spectral regions; a processing unit (23); a computer (34); and input unit (33); and a display (27), **characterized in that**

a) in the processing unit (23), means (40) for combining into one intensity vector the intensities ($I_1$, $I_2$, ... $I_n$) ascertained by detectors (19) from different spectral regions of a measurement operation;

b) means (50) for calculating a norm of the intensity vector;

c) means (52) for discarding those intensity vectors whose norm is less than a definable threshold value (SW);

d) means (56) for normalizing the intensity vectors;

e) a vector quantizer (58) for processing the intensity vectors; and

f) means (60) for reading Code Book Vectors out of the vector quantizer (58)

are provided.

**21.** System as defined in Claim 20, **characterized in that**

- means (62) for selecting a subset from the plurality of Code Book Vectors; and
- means for conveying the selected Code Book Vectors to an analysis and visualization unit are provided.

**22.** System as defined in Claim 21, **characterized in that** the visualization unit is a display (27) on which, in at least one window, the Code Book Vectors can be depicted visually in a coordinate system.

**23.** System as defined in Claim 21, **characterized in that** a multi-band detector is provided that performs an automatic adjustment on the basis of the ascertained crosstalk in order to minimize the crosstalk of the individual detection channels, a selection of the subset of the Code Book Vectors being limited to those Code Book Vectors located nearest to the axes of a coordinate system, each coordinate axis representing detection in one detection channel; and the slope of the Code Book Vectors with respect to the coordinate axes and to each other can be employed to ascertain the crosstalk of the individual detection channels.

**24.** System as defined in one of the Claims 20 to 23, **characterized in that** a counter that verifies the significance of the signal component represented by the particular Code Book Vector is allocated to each visual depiction of the axes of the coordinate system on the display (27).

**25.** System as defined in Claim 20, **characterized in that**

- means for acquiring the local coordinates of an object during the scanning operation, and the intensities associated with the local coordinates;
- means for comparing the intensity vectors to the Code Book Vectors; and
- means for classifying the intensity vectors onto the nearest Code Book Vector

are provided.

**26.** System as defined in Claim 20, **characterized in that**

- means (60) for time-offset, block-based intermediate storage of the intensity vectors; and
- means (45) for forming vectors from the particular current intensity vector and from the time-offset intensity vector acquired before the particular current and intermediately stored intensity vector, the two vectors deriving from the same location in the object (15),

are provided.

**27.** System as defined in Claim 26, **characterized in that** means are provided for analyzing the slope of the Code Book Vectors, in order to ascertain and display (27) on the display the bleaching behavior or influences of active setting parameters.

## Revendications

**1.** Procédé pour la détermination de grandeurs de processus pour un système de microscope, dans lequel le procédé est **caractérisé par** les étapes suivantes :

a) regroupement des intensités, déterminées par une pluralité de détecteurs (19), de différents domaines spectraux d'un processus de mesure pour donner un vecteur d'intensité ($\overline{I}$),

b) calcul d'une norme du vecteur d'intensité ($\overline{I}$),

c) séparation de ceux des vecteurs d'intensité dont la norme est inférieure à une valeur de seuil prédéfinissable (SW) afin que ces vecteurs ne soient pas pris en compte dans la suite du procédé,

d) normalisation des vecteurs d'intensité ($\overline{I}$),

e) acheminement des vecteurs d'intensité vers un quantificateur de vecteurs (58) et traitement des vecteurs d'intensité ($\overline{I}$) par le quantificateur de vecteurs (58), et

f) extraction de vecteurs de code Book du quantificateur de vecteurs (58).

**2.** Procédé selon la revendication 1, **caractérisé en ce que** le calcul de la norme est la distance euclidienne par rapport à une origine de coordonnées.

**3.** Procédé selon la revendication 1, **caractérisé par** les étapes suivantes :

- sélection d'une sous-quantité à partir de la pluralité des vecteurs de code Book, et
- acheminement des vecteurs de code Book sélectionnés vers une unité d'évaluation et de visualisation.

4. Procédé selon la revendication 3, **caractérisé en ce que** l'inclinaison des vecteurs de code Book vers les axes de coordonnées ainsi qu'entre eux est prise en compte pour la détermination de la diaphonie des canaux de détection individuels.

5. Procédé selon la revendication 3, **caractérisé en ce que** les axes du système de coordonnées sont représentés visuellement par n-uplets ou triplets et les vecteurs de code Book situés le plus près de ces axes sont enregistrés.

6. Procédé selon la revendication 3, **caractérisé en ce qu'**un compteur est associé à chaque représentation visuelle des axes du système de coordonnées, lequel sert à la visualisation de la signification de la fraction de signal représentée par le vecteur de code Book respectif.

7. Procédé selon la revendication 1, **caractérisé par** les étapes suivantes :

- détection des coordonnées de lieu dans un objet (15) pendant le processus de balayage et des intensités ($I_1$, $I_2$, ..., $I_n$) associées aux coordonnées de lieu,
- comparaison des vecteurs d'intensité ($\overline{I}$) avec les vecteurs de code Book, et
- classification des vecteurs d'intensité ($\overline{I}$) sur le vecteur de code Book le plus proche.

8. Procédé selon la revendication 1, **caractérisé par** les étapes suivantes, lesquelles sont réalisées avant les étapes a) à f) :

- stockage intermédiaire, basé sur blocs, décalé dans le temps des vecteurs d'intensité, et
- formation de vecteurs à partir du vecteur d'intensité respectivement actuel et du vecteur d'intensité décalé dans le temps recueilli avant le vecteur d'intensité respectivement actuel et stocké de façon intermédiaire, les deux vecteurs provenant du même lieu de l'objet (15).

9. Procédé selon la revendication 1, **caractérisé par** les étapes suivantes :

- calcul d'une matrice de correction à partir des vecteurs de code Book et
- utilisation de la matrice de correction pour les vecteurs d'intensité actuellement mesurés avec une formation d'image simultanée.

10. Dispositif pour la détermination de grandeurs de processus dans un système de microscope, **caractérisé par** :

a) des moyens (49) pour le regroupement des intensités ($I_1$, $I_2$, ..., $I_n$), déterminées par une pluralité de détecteurs (19), de différents domaines spectraux d'un processus de mesure pour donner un vecteur d'intensité ($\overline{I}$),
b) des moyens (50) pour le calcul d'une norme du vecteur d'intensité ($\overline{I}$),
c) des moyens (52) pour séparer ceux des vecteurs d'intensité dont la norme est inférieure à une valeur de seuil prédéfinissable (*SW*),
d) des moyens (56) pour la normalisation des vecteurs d'intensité,
e) un quantificateur de vecteurs (58) pour le traitement des vecteurs d'intensité, et
f) des moyens (60) pour l'extraction de vecteurs de code Book du quantificateur de vecteurs (58).

11. Dispositif selon la revendication 10, **caractérisé en ce que** les moyens (56) pour la normalisation exécutent le calcul de la distance euclidienne par rapport à une origine de coordonnées.

12. Dispositif selon la revendication 10, **caractérisé en ce que** le quantificateur de vecteurs (58) est réalisé en tant que quantificateur de vecteurs d'apprentissage ou en tant que réseau neuronal d'apprentissage de concurrence ou bien **en ce qu'**il est possible de dériver ou déduire à partir de celui-ci dans le contexte de l'approximation mathématique.

13. Dispositif selon la revendication 10, **caractérisé en ce que** l'on prévoit un détecteur à bandes multiples, lequel effectue un réglage automatique à l'aide de la diaphonie déterminée afin de minimiser la diaphonie des canaux de détection individuels, une sélection de la sous-quantité des vecteurs de code Book étant limitée à ceux des vecteurs de code Book qui sont les plus proches des axes d'un système de coordonnées, respectivement un axe de coordonnées représentant la détection dans un canal de détection, et **en ce que** l'inclinaison des vecteurs de code Book vers les axes de coordonnées ainsi qu'entre eux peut être prise en compte pour la détermination de la diaphonie des canaux de détection individuels.

14. Dispositif selon la revendication 13, **caractérisé en ce que** l'on prévoit un moyen (27) pour la représentation visuelle, et **en ce que** les axes du système de coordonnées peuvent être représentés par n-uplets ou triplets et les vecteurs de code Book situés le plus près de ces axes peuvent être enregistrés, ou bien **en ce que** les axes du système de coordonnées peuvent être représentés par paires et les vecteurs de code Book situés le plus près de ces axes peuvent être enregistrés.

15. Dispositif selon l'une des revendications 13 ou 14, **caractérisé en ce qu'**un compteur est associé à chaque représentation visuelle des axes du système de coordonnées, lequel vérifie la signification de la fraction de signal représentée par le vecteur de code Book respectif.

16. Dispositif selon la revendication 10, **caractérisé en ce que** :

- des moyens pour la détection des coordonnées de lieu d'un objet (15) pendant le processus de balayage et des intensités associées aux coordonnées de lieu,
- des moyens pour comparer les vecteurs d'intensité avec les vecteurs de code Book, et
- des moyens pour la classification des vecteurs d'intensité sur le vecteur de code Book le plus proche sont prévus.

17. Dispositif selon la revendication 10, **caractérisé en ce que**

- des moyens (66) pour le stockage intermédiaire, basé sur blocs, décalé dans le temps des vecteurs d'intensité, et
- des moyens (45) pour la formation de vecteurs à partir du vecteur d'intensité respectivement actuel et du vecteur d'intensité décalé dans le temps recueilli avant le vecteur d'intensité respectivement actuel et stocké de façon intermédiaire sont prévus, les deux vecteurs provenant du même lieu de l'objet (15).

18. Dispositif selon la revendication 17, **caractérisé en ce que** des moyens pour évaluer l'inclinaison des vecteurs de code Book sont prévus pour la détermination du comportement au blanchiment ou des influences de paramètres de réglage actifs et la visualisation sur le moyen (27) pour la représentation visuelle.

19. Dispositif selon la revendication 10, **caractérisé en ce que**

- des moyens pour le calcul d'une matrice de correction à partir des vecteurs de code Book et
- des moyens pour l'utilisation de la matrice de correction pour les vecteurs d'intensité actuellement mesurés avec une formation d'image simultanée sont prévus.

20. Système pour la détermination de grandeurs de processus dans un système de microscope, comprenant un microscope à balayage (2) pour guider un faisceau lumineux (3) de manière parallèle ou séquentielle au-dessus d'un objet (15), plusieurs détecteurs (19) pour la détermination d'intensités de domaines spectraux différents à partir de la lumière (17) partant de l'objet (15), une unité de traitement (23), un ordinateur (34), une unité de saisie (33) et un afficheur (27), **caractérisé en ce que** :

a) dans l'unité de traitement (23), des moyens (49) pour le regroupement des intensités ($I_1$, $I_2$, ..., $I_n$), déterminées par des détecteurs (19), de différents domaines spectraux d'un processus de mesure pour donner un vecteur d'intensité,
b) des moyens (50) pour le calcul d'une norme du vecteur d'intensité,
c) des moyens (52) pour la séparation de ceux des vecteurs d'intensité dont la norme est inférieure à une valeur de seuil prédéfinissable (SW),
d) des moyens (56) pour normaliser les vecteurs d'intensité,
e) un quantificateur de vecteurs (58) pour le traitement des vecteurs d'intensité, et
f) des moyens (60) pour l'extraction de vecteurs de code Book du quantificateur de vecteurs (58) sont prévus.

21. Système selon la revendication 20, **caractérisé en ce que**

- des moyens (62) pour sélectionner une sous-quantité à partir de la pluralité des vecteurs de code Book, et
- des moyens pour acheminer les vecteurs de code Book sélectionnés vers une unité d'évaluation et de visualisation sont prévus.

22. Système selon la revendication 21, **caractérisé en ce que** l'unité de visualisation est un afficheur (27) sur lequel il est possible de représenter visuellement, dans au moins une fenêtre, les vecteurs de code Book dans un système de coordonnées.

23. Système selon la revendication 21, **caractérisé en ce que** l'on prévoit un détecteur à bandes multiples, lequel effectue un réglage automatique à l'aide de la diaphonie déterminée afin de minimiser la diaphonie des canaux de détection individuels, une sélection de la sous-quantité des vecteurs de code Book étant limitée à ceux des vecteurs de code Book qui sont les plus proches des axes d'un système de coordonnées, respectivement un axe de coordonnées représentant la détection dans un canal de détection, et **en ce que** l'inclinaison des vecteurs de code Book vers les axes de coordonnées ainsi qu'entre eux peut être prise en compte pour la détermination de la diaphonie des canaux de détection individuels.

24. Système selon l'une des revendications 20 à 23, **caractérisé en ce qu'**un compteur est associé à chaque représentation visuelle des axes du système de coordonnées sur l'afficheur (27), lequel vérifie la signification de la fraction de signal représentée par le vecteur de code Book respectif.

25. Système selon la revendication 20, **caractérisé en ce que**

    - des moyens pour la détection des coordonnées de lieu d'un échantillon pendant le processus de balayage et des intensités associées aux coordonnées de lieu,
    - des moyens pour comparer les vecteurs d'intensité avec les vecteurs de code Book, et
    - des moyens pour la classification des vecteurs d'intensité sur le vecteur de code Book le plus proche sont prévus.

26. Système selon la revendication 20, **caractérisé en ce que**

    - des moyens (66) pour le stockage intermédiaire, basé sur blocs, décalé dans le temps des vecteurs d'intensité, et
    - des moyens (45) pour la formation de vecteurs à partir du vecteur d'intensité respectivement actuel et du vecteur d'intensité décalé dans le temps recueilli avant le vecteur d'intensité respectivement actuel et stocké de façon intermédiaire sont prévus, les deux vecteurs provenant du même lieu de l'objet (15).

27. Système selon la revendication 26, **caractérisé en ce que** des moyens pour évaluer l'inclinaison des vecteurs de code Book sont prévus pour la détermination du comportement au blanchiment ou des influences de paramètres de réglage actifs et la visualisation sur l'afficheur (27).

Fig. 1

EP 1 219 919 B1

Fig. 2

Fig. 3

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19829944 A

- US 5719024 A

**In der Beschreibung aufgeführte Nicht-Patentliteratur**

- **DEMANDOLX.** Davoust: Multicolour Analysis and local Image Correlation in Confocal Microscopy. *Journal of Microscopy,* Januar 1997, vol. 185, 21-36
- Fogel: How to Solve. **MICHAELEWICZ.** Modern Heuristic. Springer
- **MOON ; STIRLING.** Mathematical Methods and Algorithms for Signal Processing. Prentice Hall, 2000

- **VERGL. RIPLEY.** *Pattern Recognition and Neural Networks, Cambridge: CUP,* 1996
- **LUO ; UNBEHAUEN.** *Applied Neural Networks for Signal Processing, Cambridge: CUP,* 1997
- **BERND FRITZKE.** *Vektorbasierte Neuronale Netze, Aachen: Shaker,* 1998
- **VERGL. HAYKIN.** Neural Networks. MacMaster University Press, 1994